Europäisches Patentamt

European Patent Office

Office européen des brevets

(19)

(11) Veröffentlichungsnummer: **0 251 175**
**B1**

(12) **EUROPÄISCHE PATENTSCHRIFT**

(45) Veröffentlichungstag der Patentschrift:
24.10.90

(21) Anmeldenummer: 87109065.0

(22) Anmeldetag: 24.06.87

(51) Int. Cl.5: **G01L 1/26**, G01L 1/22

(54) Aufnehmer für Vorrichtungen zum Messen von Druck- Zug-, Scherkräften.

(30) Priorität: 26.06.86 DE 3621378

(43) Veröffentlichungstag der Anmeldung:
07.01.88 Patentblatt 88/1

(45) Bekanntmachung des Hinweises auf die Patenterteilung:
24.10.90 Patentblatt 90/43

(84) Benannte Vertragsstaaten:
AT BE CH DE ES FR GB IT LI NL SE

(56) Entgegenhaltungen:
DE-A- 3 336 727
DE-B- 2 827 061
US-A- 3 135 112
US-A- 4 338 825

(73) Patentinhaber: A. M. Erichsen GmbH, Simonshöfchen 31,
D-5600 Wuppertal 11(DE)

(72) Erfinder: Runzheimer, Manfred, Bendahler Strasse 43,
D-5600 Wuppertal 2(DE)

(74) Vertreter: Peerbooms, Rudolf, Dipl.-Phys.,
Postfach 200 208 Dickmannstrasse 45c,
D-5600 Wuppertal 2(DE)

## Beschreibung

Die Erfindung betrifft Kraftaufnehmer für Vorrichtungen zum Messen von Druck-, Zug- oder Scherkräften, welcher ein einstückiges, quaderförmiges durch Schlitze unterteiltes Federelement mit Lagerbereich, mit Krafteinleitungsbereich und mit Verformungsbereich aufweist, dem je ein in Lastrichtung und ein in Gegenrichtung wirksamer Anschlag zugeordnet ist.

Bei den bekannten derartigen Aufnehmern (US-PS 3 135 112) ist das Federelement mit durch Bohren und Fräsen hergestellten Schlitzen versehen, die den Krafteinleitungsbereich, den Lagerbereich und den Verformungsbereich voneinander trennen. Fertigungstechnisch bedingt weisen die Schlitze bei den bekannten Aufnehmern eine Breite auf, die um ein Vielfaches größer als die Durchbiegung bei Nennlast ist. Bei einer Überlastung besteht dort die Gefahr einer plastischen Verformung des Federelementes und insbesondere die Gefahr einer Überanspruchung und dauerhaften Beschädigung der Dehnungsmeßstreifen und Biegezonen des Federelementes. Es ist bekannt, derartige Aufnehmer mit einer Überlastsicherung in Form von flächigen Anschlagstücken oder von Anschlagschrauben zu versehen, die in entsprechende Gewindebohrungen des Federelementes oder eines Gehäuses eingeschraubt und entsprechend der maximal zulässigen Überlast justiert werden. Solche Überlastsicherungen erfordern jedoch gesonderte Bauteile, was angesichts der hohen Präzisionsanforderungen einen großen technischen Aufwand bedingt.

Durch die DE-A 3 336 727 ist ein Kraftaufnehmer mit einem ringförmigen Federelement bekannt, das an zwei sich diametral gegenüberliegenden Lagerbereichen an einem äußeren Stützring befestigt ist und durch zwei zum Rand hin offene, bogenförmige Schlitze derart unterteilt ist, daß der innere, den Krafteinleitungsbereich darstellende Teil des ringförmigen Federelementes gegenüber den Lagerbereichen elastisch auslenkbar ist. Die Schlitze sind dort im Erodierverfahren hergestellt, jedoch ist auch dort die Überlastsicherung durch einen im äußeren Stützring befestigten Anschlagstift erreicht, der in eine diametral gerichtete Sacklochbohrung des Federelementes eingreift. Auch dort ist die Ausbildung einer exakten Überlastsicherung mechanisch sehr aufwendig.

Der Erfindung liegt die Aufgabe zugrunde, die Herstellkosten und die Baugröße der gattungsgemäßen überlastgesicherten Aufnehmer zu verringern und Justierarbeiten zu erübrigen.

Zur Lösung dieser Aufgabe ist gemäß einer ersten Ausführungsform erfindungsgemäß vorgesehen,

a) daß das Federelement als abragender Biegebalken mit seitlich nebeneinander liegendem Lagerbereich und Krafteinleitungsbereich ausgebildet ist,

b) daß das Federelement durch einen etwa U-förmigen Schlitz unterteilt ist
– in einen oberen, den Krafteinleitungsbereich mit dem Lagerbereich verbindenden Verformungsbereich,

– in eine mit dem Krafteinleitungsbereich starr verbundenen Zunge und

– in einen unteren, den Krafteinleitungsbereich mit dem Lagerbereich verbindenden Verformungsbereich,

c) daß der Schlitz nahe des Lagerbereiches derart verläuft, daß sich dort zungenseitige Schlitzwände und lagerbereichsseitige Schlitzwände an einer Stelle als Überlastanschlag und an einer anderen Stelle als Überlast-Gegenanschlag gegenüberliegen,

d) daß der Schlitz im Erodierverfahren hergestellt ist,

e) daß der Abstand der Schlitzwände im Bereich der Anschläge um etwa 10% größer als der Auslenkweg bei Nennlast ist.

Bei einem gattungsgemäßen Kraftaufnehmer, bei dem Krafteinleitungsbereich und Lagerbereich in Krafteinleitungsrichtung hintereinanderliegen, ist die Erfindungsaufgabe dadurch gelöst, daß Krafteinleitungsbereich und Lagerbereich über seitliche Verformungsbereiche miteinander verbunden sind, daß die Schlitze im Erodierverfahren hergestellt sind und daß die Schlitze derart verlaufen, daß der Krafteinleitungsbereich eine L- oder T-förmige Zunge aufweist, deren Querschenkel zwischen Gegenanschlägen des Krafteinleitungsbereiches eingefaßt sind.

Bei einem quaderförmigen Kraftaufnehmer, bei dem zwei randseitig offene Schlitze vorgesehen sind, ist die Erfindungsaufgabe dadurch gelöst, daß die Schlitze im Erodierverfahren hergestellt sind und nahe ihrer Mündung unter Bildung L-förmiger Überlastanschlagzungen mehrfach abgewinkelt sind.

Bei allen Ausführungsformen kann der Erfindung zufolge die Breite der erodierten Schlitze in der Größenordnung von 0,1 bis 0,5 Millimetern liegen.

Durch Erodieren, d. h. durch funkenerosives Drahtschneiden, lassen sich in aus Stahl und allen aus elektrisch leitendem Material bestehenden Federelementen äußerst dünne Schlitze mit größter geometrischer Präzision herstellen.

Die Erfindung erbringt eine Reihe von wesentlichen Vorteilen. Zum einen ist die Herstellung der Aufnehmer wesentlich verbilligt, da die Ausbildung der Schlitze durch Erodieren wesentlich preisgünstiger ausführbar ist als durch Bohren und Fräsen. Die engen Schlitze erlauben es in Verbindung mit der erfindungsgemäßen Formgebung der ineinandergreifenden Lager- und Krafteinleitungsbereiche, ihre Begrenzungswände unmittelbar als Überlast-Anschlagflächen auszunutzen. Hierdurch entfallen gesonderte Überlast-Anschlagelemente und werden kleine Bauformen ermöglicht. Die Aufnehmer nach der Erfindung können reproduzierbar hergestellt werden und erlauben eine preiswerte Massenfertigung für einen Einsatz beispielsweise bei Wägeeinrichtungen.

Die Erfindung wird im folgenden anhand mehrerer in der Zeichnung dargestellter Ausführungsbeispiele näher beschrieben. In der Zeichnung zeigen:

Fig. 1 in Draufsicht einen Zug- und Druckaufnehmer nach der Erfindung,

Fig. 2 eine Ansicht, teils geschnitten, gemäß der Linie II–II in Fig. 1,

Fig. 3 in einem Querschnitt ein zweites Ausführungsbeispiel eines Zug- und Druckaufnehmers,

Fig. 4 ein drittes Ausführungsbeispiel für einen Zug- und Druckaufnehmer,

Fig. 5 ein weiteres Ausführungsbeispiel für einen Druck- und Zugaufnehmer,

Fig. 6 einen Scherkraftaufnehmer nach der Erfindung,

Fig. 7 einen Schnitt gemäß der Linie VII–VII in Fig. 5 und

Fig. 8 ein weiteres Beispiel für einen Scherkraftaufnehmer nach der Erfindung.

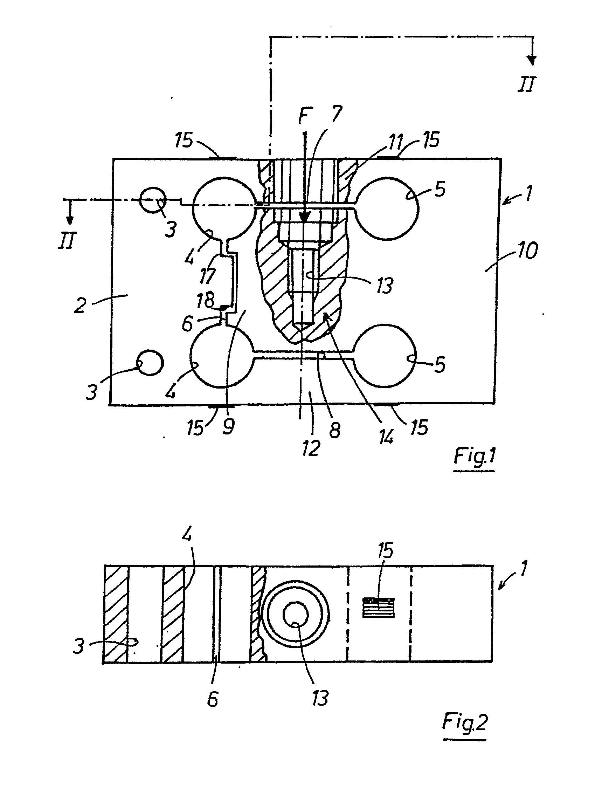

Der Druck- und Zugaufnehmer nach den Fig. 1 und 2 besteht aus einem quaderförmigen Stahlfederelement 1, das an einem, den Lagerbereich 2 bildenden Ende mit zwei Bohrungen 3 zur Befestigung an einem Gehäuse und sonstigem Widerlagerteil versehen ist. Das Federelement weist vier, an den Ecken eines Quadrates angeordnete runde Durchgangslöcher 4, 5 auf, welche senkrecht zu den Breitseiten des quaderförmigen Federelementes gerichtet sind. Die beiden an der Seite des Lagerbereiches 2 liegenden Durchgangsbohrungen 4 sind miteinander durch einen schmalen, eine Anschlagnase bildenden Schlitz 6 und jeweils mit ihrer anderen, benachbarten Durchgangsbohrung 4 über Parallele Schlitze 7 und 8 verbunden. Die Schlitze 6, 7, 8 begrenzen eine Zunge 9, die mit dem dem Lagerbereich 2 gegenüberliegenden Ende 10 des Federelementes starr verbunden ist. Das Ende 10 ist über die beiden außenliegenden Verformungsbereiche, sogenannten Ober- und Untergurte, mit dem Lagerbereich 2 verbunden. Der obere Verformungsbereich 11 ist mit einer erweiterten Bohrung versehen, durch die hindurch eine Schraube in eine Gewindebohrung 13 in den zwischen den beiden Schlitzen 6 und 7 liegenden Krafteinleitungsbereich 14 eingeschraubt wird. Über diese Schraube (nicht gezeigt) können Zug- oder Druckkräfte F eingeleitet werden, wobei die Verformung der Bereiche 11 und 12 mittels außen an dem Federelement angebrachter Dehnungsmeßstreifen 15 erfaßt wird. Die Schlitze 7 und 8 weisen beim Ausführungsbeispiel nach den Fig. 1 und 2 eine Breite von etwa 0,2 bis 0,5 Millimetern auf, so daß bei einer Überbelastung die Zunge 9 je nach Zug- oder Druckbelastung auf die nahe beim Lagerbereich 2 an der Anschlagnase liegenden Anschläge 17 oder 18 auftrifft.

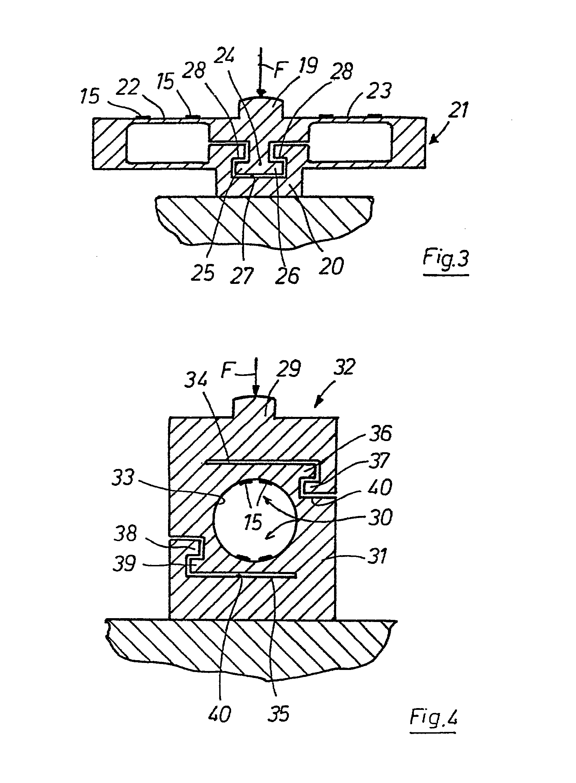

Beim Zug- und Druckmesser nach Fig. 3 liegen Krafteinleitungsbereich 19 und Lagerbereich 20 des Federelementes 21 in Einleitungsrichtung der Kraft F unmittelbar hintereinander. Die Bereiche 19, 20 sind über seitliche Verformungsbereiche 22, 23 miteinander verbunden, welche die Dehnungsmeßstreifen 15 tragen. Der Krafteinleitungsbereich 19 weist eine untere, starre Zunge 24 auf, deren Querschenkel 25, 26 von U-förmigen Ausnehmungen des Lagerbereiches 20 eingefaßt sind, wobei wiederum ein schmaler Spalt von nur ein oder wenigen Zehntel Millimeter Breite zwischen Lagerbereich 20 und Krafteinleitungsbereich 19 vorgesehen ist. Bei Drucküberbelastung treffen die Querschenkel 25, 26 der Zunge 24 auf die untere Anschlagfläche 27 und bei Zugüberbelastung auf die oberen Anschläge 28 am Lagerteil 20 auf.

Bei dem Ausführungsbeispiel nach Fig. 4 eines Zug- und Druckaufnehmers liegen Krafteinleitungsbereich 29, Verformungsbereich 30 und Lagerbereich 31 im wesentlichen in Krafteinleitungsrichtung hintereinander. Der Aufnehmer besteht auch hier aus einem im wesentlichen quaderförmigen Federelement 32. Im Verformungsbereich 30 ist eine Durchgangsbohrung 33 vorgesehen, an deren Wandung die Dehnungsmeßstreifen 15 angeordnet sind. Die Bereiche 29, 30, 31 sind jeweils durch schmale, zu entgegengesetzten Seiten des Federelementes 32 hin offene Schlitze 34, 35 voneinander getrennt, welche nahe ihrer Mündung mehrfach unter Bildung von L-förmigen, sich jeweils paarweise hintergreifenden Anschlagzungen 36, 37, 38, 39 abgewinkelt sind. Die dem Krafteinleitungsbereich 29 zugehörigen Zungen 37, 39 treffen bei Zug-Überbelastung als Anschläge auf die dem Lagerbereich 31 zugehörigen Zungen 36 und 38 auf, bzw. treffen bei Druck-Überlastung auf die am Lagerbereich 31 vorgesehenen unteren Schlitzwände 40 auf.

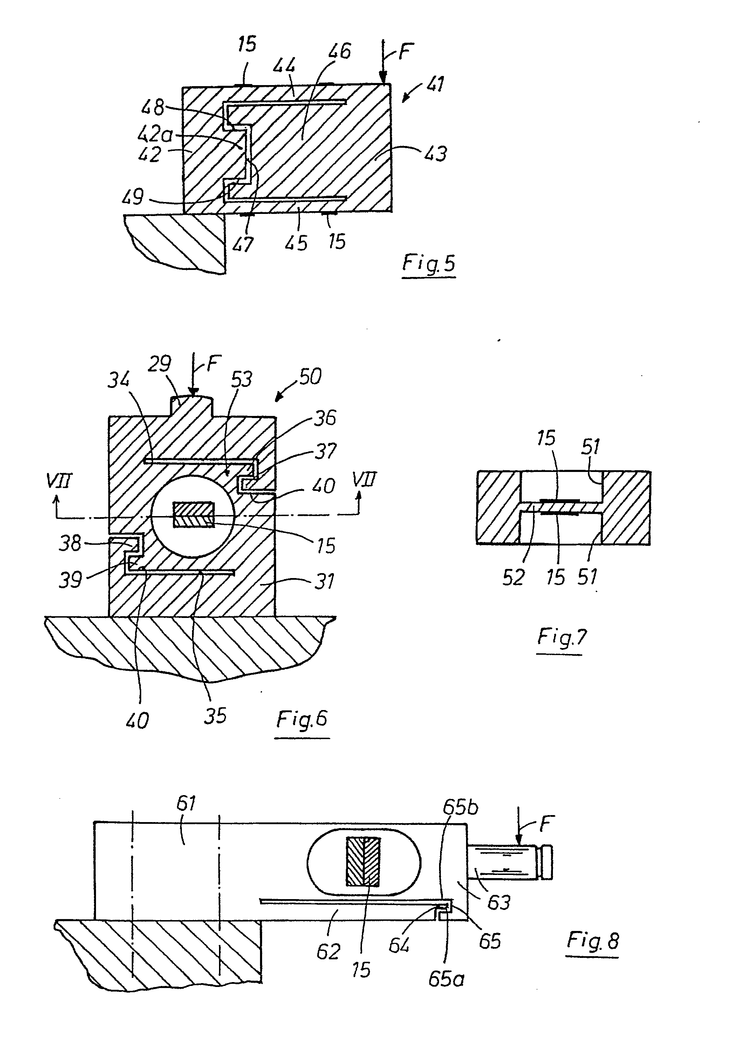

Fig. 5 veranschaulicht eine weitere Ausführungsform eines Druck- und Zugaufnehmers, bei dem das Federelement 41 als abragender Biegebalken mit seitlich nebeneinander liegendem Lagerbereich 42 und Krafteinleitungsbereich 43 ausgebildet ist. Der Krafteinleitungsbereich 43 ist über einen oberen Verformungsbereich 44 und einen unteren Verformungsbereich 45 mit dem Lagerbereich 42 verbunden und weist eine starre Zunge 46 auf, die wiederum nur durch einen schmalen, insgesamt etwa U-förmig verlaufenden Schlitz 47 vom Lagerbereich 42 und den Verformungsbereichen 44 und 45 getrennt ist. Bei Überlastung trifft die Zunge 46 auf die Anschläge 48, 49 der Anschlagnase 42a auf, die hier an der Übergangsstelle von Lagerbereich 42 und Verformungsbereich 44, 45 liegen.

Die Fig. 6 und 7 zeigen einen Scherkraftaufnehmer, bei dem das Federelement 50 mit Ausnahme der mittigen Sacklochbohrungen 51 identisch wie bei dem Zug- und Druckaufnehmer nach Fig. 4 ausgebildet ist. Anstelle der Durchgangsbohrung 33 nach Fig. 4 sind hier zwei sich gegenüberliegende Sacklochbohrungen 51 vorgesehen, zwischen denen ein Steg 52 als eigentliches Verformungselement des Verformungsbereiches 53 belassen ist, auf dem beidseits Dehnungsmeßstreifen 15 angeordnet sind. Die Überlastsicherung ist hier gleich der beim Ausführungsbeispiel nach Fig. 4.

Beim Scherkraftaufnehmer nach Fig. 8 ragt vom Lagerbereich 61 nur eine Zunge 62 in Richtung des Krafteinleitungsteiles 63 ab, die hier mit einer Zungenspitze 64 in eine U-Nut 65 am Krafteinleitungsteil 63 hineinragt, so daß auch hier sowohl für Zug als auch für Druck jeweils ein Überlastanschlag 65a, 65b gegeben ist.

## Patentansprüche

1. Kraftaufnehmer für Vorrichtungen zum Messen von Druck-Zug- oder Scherkräften, welcher ein einstückiges, quaderförmiges, durch Schlitze unterteiltes Federelement (1; 41) mit Lagerbereich (2; 42), mit Krafteinleitungsbereich (14; 43) und mit Verformungsbereich (11, 12; 44, 45) aufweist, dem je ein in Lastrichtung und ein in Gegenrichtung wirksamer Anschlag (17, 18; 48, 49) zugeordnet ist, dadurch gekennzeichnet,

a) daß das Federelement (1; 41) als abragender Biegebalken mit seitlich nebeneinander liegendem Lagerbereich (2; 42) und Krafteinleitungsbereich (14; 43) ausgebildet ist,

b) daß das Federelement (1; 41) durch einen etwa U-förmigen Schlitz (6, 7, 8; 47) unterteilt ist

– in einen oberen, den Krafteinleitungsbereich (14; 43) mit dem Lagerbereich (2; 42) verbindenden Verformungsbereich (11; 45),

– in eine mit dem Krafteinleitungsbereich (14; 43) starr verbundenen Zunge (9; 46) und

– in einen unteren, den Krafteinleitungsbereich (14; 43) mit dem Lagerbereich (2; 42) verbindenden Verformungsbereich (12; 45),

c) daß der Schlitz (6, 7, 8; 41) nahe des Lagerbereiches (2; 42) derart verläuft, daß sich dort zungenseitige Schlitzwände und lagerbereichsseitige Schlitzwände an einer Stelle als Überlastanschlag (17; 48) und an einer anderen Stelle als Überlast-Gegenanschlag (18; 49) gegenüberliegen,

d) daß der Schlitz (6, 7, 8; 41) im Erodierverfahren hergestellt ist und

e) daß der Abstand der Schlitzwände im Bereich der Anschläge (17, 18) um etwa 10% größer als der Auslenkweg bei Nennlast ist.

2. Kraftaufnehmer für Vorrichtungen zum Messen von Druck-Zug- oder Scherkräften, welcher ein einstückiges, quaderförmiges, durch Schlitze unterteiltes Federelement (21) mit Lagerbereich (20), mit Krafteinleitungsbereich (19) und mit Verformungsbereich (22, 23) aufweist, wobei Krafteinleitungsbereich (19) und Lagerbereich (20) in Krafteinleitungsrichtung hintereinander liegen und je ein in Lastrichtung und ein in Gegenrichtung wirksamer Anschlag (17, 18) vorgesehen sind, dadurch gekennzeichnet,

a) daß der Krafteinleitungsbereich (19) und der Lagerbereich (20) über seitliche Verformungsbereiche (22, 23) miteinander verbunden sind,

b) daß die Schlitze im Erodierverfahren hergestellt sind und

c) daß die Schlitze derart verlaufen, daß der Krafteinleitungsbereich eine L- oder T-förmige Zunge (24) aufweist, deren Querschenkel (25, 26) zwischen Gegenanschlägen (27, 28) des Krafteinleitungsbereiches (20) eingefaßt sind.

3. Kraftaufnehmer für Vorrichtungen zum Messen von Druck-, Zug- und/oder Scherkräften, welcher ein einstückiges, quaderförmiges Federelement (32, 50) aufweist, welches durch zwei zu entgegengesetzten Seiten hin offene Schlitze (34, 35) in Lagerbereich (31), Krafteinleitungsbereich (29) und Verformungsbereich (30) unterteilt ist, wobei Krafteinleitungsbereich (29) und Lagerbereich (31) in Krafteinleitungsrichtung hintereinander liegen und je ein in Lastrichtung und ein in Gegenrichtung wirksamer Anschlag vorgesehen ist, dadurch gekennzeichnet, daß die Schlitze (34, 35) im Erodierverfahren hergestellt sind und nahe ihrer Mündung unter Bildung L-förmiger Überlastanschlagungen (36, 37, 38, 39) mehrfach abgewinkelt sind.

4. Aufnehmer nach einem der Ansprüche 1 bis 3, dadurch gekennzeichnet, daß die Breite der erodierten Schlitze in der Größenordnung von 0,1 bis 0,5 Millimetern liegt.

## Claims

1. A force transducer for devices for measuring compressive, tensile or shearing forces, having a one-piece, parallelipipedic spring element (1; 41) which is subdivided by slots and has a bearing zone (2; 42), a force initiation zone (14; 43) and a deformation zone (11, 12; 44, 45) and with which a stop (17, 18; 48, 49) operative in the loading direction and the opposite direction respectively is associated, characterized in that

a) the spring element (1; 41) is constructed in the form of a downwardly extending bending beam having the bearing zone (2; 42) and the force initiation zone (14; 43) disposed laterally one beside the other;

b) the spring element (1; 41) is subdivided by a substantially U-shaped slot (6, 7, 8; 47)

– into an upper deformation zone (11; 45) connecting the force initiation zone (14; 43) to the bearing zone (2; 42),

– a tongue (9; 46) rigidly connected to the force initiation zone (14; 43) and

– a lower deformation zone (12; 45) connecting the force initiation zone (14; 43) to the bearing zone (2; 42);

c) the slot (6, 7, 8; 41) so extends adjacent the bearing zone (2; 42) that at that place tongue side slotted walls and bearing zone side slotted walls are disposed opposite one another at one place as an overload stop (17; 48) and at another place as an overload counterstop (18; 49);

d) the slot (6, 7, 8; 41) is produced by the erosion process and

e) the distance of the slotted walls in the zone of the stops (17, 18) is approximately 10% greater than the deflection path at rated load.

2. A force transducer for devices for measuring compressive, tensile or shearing forces, which has a one-piece, parallelipipedic spring element (21) which is subdivided by slots and has a bearing zone (20), a force initiation zone (19) and a deformation zone (22, 23), the force initiation zone (19) and the bearing zone (20) being disposed one after the other in the force initiation direction and a stop (17, 18) operative in the loading direction and the opposite direction respectively being provided, characterized in that

a) the force initiation zone (19) and the bearing zone (20) are interconnected via lateral deformation zones (22, 23);

b) the slots are produced by the erosion process and

c) the slots so extend that the force initiation zone has an L-shaped or T-shaped tongue (24) whose transverse arms (25, 26) are enclosed between counterstops (27, 28) of the force initiation zone (20).

3. A force transducer for devices for measuring compressive, tensile and/or shearing forces, which has a one-piece, parallelipipedic spring element (32, 50) which is subdivided by two slots (34, 35) open to opposite sides into a bearing zone (31), a force initiation zone (29) and a deformation zone (30), the force initiation zone (29) and the bearing zone (31) being disposed one after the other in the force initiation direction and stops operative in the loading direction and the opposite direction respectively being provided, characterized in that the slots (34, 35) are produced by the erosion process and are multiply bent adjacent their mouths to form L-shaped overload stop tongues (36, 37, 38, 39).

4. A transducer according to one of claims 1 to 3, characterized in that the width of the eroded slots is of the order of magnitude of 0.1 to 0.5 mm.

## Revendications

1. Capteur de forces pour appareils de mesure de forces de compression, de traction et de cisaillement qui présente un élément elastique parallélépipédique d'une seule pièce (1; 41) divisé par des fentes et ayant une zone d'appui (2; 42), une zone d'introduction de la force (14; 43) et une zone de déformation (11, 12; 44, 45) à laquelle sont associées une butée agissant dans le sens de la charge et une butée agissant dans le sens opposé (17, 18; 48, 49), caractérisé par le fait que

a) l'élément élastique (1; 41) est constitué d'une poutre fléchissante saillante avec zone d'appui (2; 42) et zone d'introduction de la force (14; 43) situées côte à côte latéralement,

b) l'élément élastique (1; 41) est divisé par une fente approximativement en U (6, 7, 8; 47) en
– une zone supérieure de déformation (11; 45) réunissant la zone d'introduction de la force (14; 43) à la zone d'appui (2; 42),
– une languette (9; 46) unie rigidement à la zone d'introduction de la force (14; 43) et
– une zone inférieure de déformation (12; 45) réunissant la zone d'introduction de la force (14; 43) à la zone d'appui (2; 42),

c) la fente (6, 7, 8; 47) s'étend près de la zone d'appui (2; 42) de façon telle qu'à cet endroit, des parois de cette fente côté languette et des parois de cette fente côté zone d'appui se fassent face à un endroit comme butée de surcharge (17; 48) et à un autre endroit comme contre-butée de surcharge (18; 49),

d) la fente (6, 7, 8; 47) est réalisée par usinage par electroérosion et

e) la distance des parois de la fente dans la zone des butées (17, 18) est supérieure d'environ 10% à la déviation à la charge nominale.

2. Capteur de forces pour appareils de mesure de forces de compression, de traction ou de cisaillement qui présente un élément élastique parallélépipédique d'une seule pièce (21) divisé par des fentes et ayant une zone d'appui (20), une zone d'introduction de la force (19) et une zone de déformation (22, 23), la zone d'introduction de la force (19) et la zone d'appui (20) étant situées l'une derrière l'autre dans la direction d'introduction de la force, et une butée agissant dans le sens de la charge et une butée agissant dans le sens opposé (17, 18) étant prévues, caractérisé par le fait que

a) la zone d'introduction de la force (19) et la zone d'appui (20) sont réunies par des zones latérales de déformation (22, 23),

b) les fentes sont réalisées par usinage par électroérosion et

c) les fentes ont une allure telle que la zone d'introduction de la force présente une languette en L ou en T (24) dont les branches transversales (25, 26) sont encastrées entre des contre-butées (27, 28) de la zone d'introduction de la force (20).

3. Capteur de forces pour appareils de mesure de forces de compression, de traction et/ou de cisaillement qui présente un élément élastique parallélépipédique d'une seule pièce (32, 50) que deux fentes (34, 35), débouchant sur des côtés opposés, divisent en une zone d'appui (31), une zone d'introduction de la force (29) et une zone de déformation (30), la zone d'introduction de la force (29) et la zone d'appui (31) étant situées l'une derrière l'autre dans la direction d'introduction de la force, et une butée agissant dans la direction de la charge et une butée agissant dans le sens opposé étant prévues, caractérisé par le fait que les fentes (34, 35) sont réalisées par usinage par électroérosion et sont, près de leur débouché, coudées plusieurs fois avec formation de languettes de butée de surcharge en L (36, 37, 38, 39).

4. Capteur selon l'une des revendications 1 à 3, caractérisé par le fait que la largeur des fentes réalisées par usinage par électroérosion est de l'ordre de 0,1 à 0,5 millimètre.

EP 0 251 175 B1

Fig.1

Fig.2

*Fig.3*

*Fig.4*

Fig.5

Fig.6

Fig.7

Fig. 8